# EUROPÄISCHE PATENTSCHRIFT

(11) **EP 2 087 821 B1**
(45) Veröffentlichungstag und Bekanntmachung des Hinweises auf die Patenterteilung: **20.06.2012**
(21) Anmeldenummer: 09152003.1
(22) Anmeldetag: 04.02.2009
(51) Int. Cl.: A47J 37/06

(54) **Grillvorrichtung**
Grill device
Dispositif de grill

(30) Priorität: 08.02.2008 DE 102008008143
(43) Veröffentlichungstag der Anmeldung: 12.08.2009
(73) Patentinhaber: Eisfink Max Maier GmbH & Co. KG, 71636 LUDWIGSBURG (DE)
(72) Erfinder: Eberhard, Jürgen, 71726, Benningen (DE)
(74) Vertreter: Menges, Rolf

(56) Entgegenhaltungen:
- DE-A1- 3 407 965
- US-A- 3 317 709
- US-A- 3 797 375
- US-A- 5 413 032

## Beschreibung

Die Erfindung betrifft eine Grillvorrichtung der im Oberbegriff des Patentanspruchs 1 angegebenen Art.

Eine solche Grillvorrichtung ist aus dem Dokument US-A-5 413 032 bekannt. Dieses Dokument offenbart einen Grill, dessen Grillplatte, eine dünne Stahlplatte, durch mehrere Heizkörper in mehreren Heizzonen, von denen jeweils eine einem der Heizkörper zugeordnet ist, beheizbar ist. Jede Heizzone hat ihre eigenen Steuerungen, bei denen es sich um einen Ein/Aus-Schalter und einen Temperaturwählschalter handelt. Die Heizkörper sind an der Unterseite der Grillplatte lösbar befestigte Strahlungsheizkörper. Jedem Heizkörper ist ein Thermoelement als ein erster Temperaturfühler zugeordnet. Diese Temperaturfühler sind jeweils in einer Bohrung in der Grillplatte angeordnet, messen also die Temperatur der Grillfläche. Bei dieser bekannten Grillvorrichtung muss der Koch so viele Einstellknöpfe bedienen, wie Heizzonen vorhanden sind.

Eine ähnliche Grillvorrichtung ist aus dem Dokument DE 34 07 965 A1 bekannt. Diese bekannte Grillvorrichtung hat eine Grillplatte, die an ihrer Oberseite eine durchgehend glatte Grillfläche aufweist und an ihrer Unterseite in mehrere gleich große Einzelfelder unterteilt ist. Die Einzelfelder sind durch an der Unterseite der Grillplatte angeordnete Versteifungsrippen gegeneinander abgegrenzt. Jedes Einzelfeld wird mit einem gesonderten, innig mit der Unterseite verbundenen Rohrheizkörper unabhängig von allen anderen Einzelfeldern und gesteuert durch einen Regelthermostaten beheizt. Dadurch soll die durch die Versteifungsrippen und zusätzlich durch Randzargen versteifte Grillplatte aus extrem dünnem Stahlblech ohne die Gefahr von Verwerfungen extrem schnell aufgeheizt sowie wieder abgekühlt werden können. Die Dicke des Plattenkörpers beträgt etwa 1,5 bis 5 mm. Die Rohrheizkörper sind mit einem Regelthermostat verbunden, wie es auch bei dem in diesem Dokument beschriebenen Ausführungsbeispiel der Fall ist. Es soll aber denkbar sein, mehrere Regelthermostaten, beispielsweise für jedes Einzelfeld einen gesonderten Regelthermostaten vorzusehen oder für jedes Einzelfeld einen gesonderten Temperaturfühler vorzusehen und diese Temperaturfühler auf einen einzigen Thermostaten wirken zu lassen. Die Anordnung des oder der Temperaturfühler ist dabei so getroffen, dass der Fühler nur geringfügig kürzer als das zugehörige Einzelfeld ist, an welchem er unmittelbar neben dem Rohrheizkörper angebracht ist. Die Rohrheizkörper sind nahezu quadratisch spiralförmig gebogen und sind an ihrer die Unterseite berührenden Mantellinie durch sogenanntes Anlegieren oder durch Hartlötung befestigt. Trotzdem würde eine solche Grillplatte beim Aufheizen thermisch sehr träge reagieren, wenn ihr Platten körper nicht eine extrem niedrige und daher vernachlässigbare Wärmespeicherkapazität aufgrund seiner Leichtbauweise aus extrem dünnem Stahlblech hätte. Eine solche Bauweise ist für das Erzielen eines optimalen Grillresultats ungeeignet und macht darüber hinaus die Grillplatte in der Fertigung teuer, weil sie durch die oben erwähnten Versteifungsrippen und Randzargen versteift werden muss. Die Fertigung wird weiter dadurch erschwert und verteuert, dass jeder Rohrheizkörper speziell auf die Größe eines Einzelfeldes zugeschnitten hergestellt und dann einzeln mit der Unterseite der Grillplatte stoffschlüssig verbunden werden muss. Der Rohrheizkörper selbst reagiert thermisch träge, weil in seinem Inneren ein Heizdraht verlegt ist, der von dem umgebenden Rohr isoliert ist. Selbst wenn also der Plattenkörper der Grillplatte mit geringer Wärmekapazität ausgestattet ist, reagiert die Grillplatte insgesamt thermisch träge wegen der unvermeidlichen thermischen Trägheit der Rohrheizkörper. Grundsätzlich ist daher eine Grillplatte mit Rohrheizkörpern aufgrund der thermischen Trägheit thermisch wenig effizient. Besonders problematisch ist, dass bei dem Ausfall eines Rohrheizkörpers, wozu es wegen der hohen thermischen Belastung häufig kommt, die Grillplatte insgesamt ausgetauscht und entsorgt werden muss, weil eine Reparatur viel zu aufwendig wäre. Die Steuerung der bekannten Grillplatte ist ebenfalls problematisch, weil die unmittelbar angrenzend an die Rohrheizkörper angebrachten Temperaturfühler hauptsächlich durch die Wärme der Rohrheizkörper beeinflusst werden und kaum in der Lage sein dürften, auf Temperaturänderungen anzusprechen, die sich auf der Grillfläche der Grillplatte einstellen, zum Beispiel wenn Grillgut aufgelegt oder entnommen wird. Diese bekannte Grillvorrichtung wird daher unvermeidlich stets mit ein und derselben Heizleistung und üblicherweise mit der maximal einstellbaren Heizleistung betrieben werden, was wegen des unnötigen Eriergieverbrauches heutzutage als untragbar angesehen wird. Der an und für sich vorgesehene, vorstehend bereits erwähnte Einsatz von einem gesonderten Regelthermostaten für jedes Einzelfeld würde einerseits bedeuten, dass der Koch auch bei dieser Grillvorrichtung so viele Einstellknöpfe zu bedienen hätte, wie Einzelfelder oder Heizzonen vorhanden sind, andererseits hinsichtlich der Energiebilanz aber kaum Vorteile bringen, weil die unmittelbar an den Rohrheizkörpern angebrachten Temperaturfühler kaum Temperaturdifferenzen an der Grillfläche feststellen könnten, die eine effizientere Energieausnutzung ermöglichen würden.

Es sind weiter bereits Grillvorrichtungen bekannt geworden, bei denen die fertigungs- und montagetechnischen Nachteile des Einsatzes von Rohrheizkörpern bei einer Grillvorrichtung dadurch gemildert werden, dass die Rohrheizkörper nicht stoffschlüssig mit der Grillplatte verbunden werden, sondern mittels einer Spannplatte an die Unterseite der Grillplatte lediglich angepresst werden. Das ist zwar eine reparaturfreundliche Konstruktion insofern, als ein defekter Rohrheizkörper ohne weiteres ausgetauscht werden kann, der Fertigungs- und Montageaufwand ist bei einer solchen Grillplatte jedoch eher noch höher und das Problem der thermischen Trägheit der Kombination Grillplatte/Rohrheizkörper und der dadurch bedingten Erschwernis einer energieeffizienten Steuerung der Grillplatte besteht nach wie vor.

Aus dem Dokument WO 2007/083217 ist ein strahlungsbeheiztes Heizelement bekannt, das auf der überlegung beruht, die übliche Kochplattenbeheizung, die durch Kontaktwärmeübertragung zwischen Wärmequelle und Kochplatte erfolgt, durch eine Strahlungsbeheizung der Kochplatte zu ersetzen. Als Wärmequelle wird eine Strahlungsheizquelle eingesetzt, wie sie üblicherweise für die Strahlungsbeheizung von glaskeramischen Kochfeldern eingesetzt wird. Die Temperaturregelung der Kochplatte erfolgt wie üblich mit einem Temperaturfühler mit zugeordnetem Regler. Der Temperaturfühler dient dabei zum Erfassen der Temperatur der Kochplatte. Die Temperaturerfassung dient zum Einhalten der gesetzlichen Normen, da die maximale Temperatur nicht zu einem Zerstören der Kochplatte oder zu Unfällen in Folge ihrer Überhitzung führen darf. Außerdem dient die Temperaturerfassung der Regelung des Koch- oder Bratprozesses. Die Kochplatte kann dabei sowohl einzeln als auch als integriertes Kochfeld, bestehend aus mehreren Einzelkochplatten, eingesetzt werden. Diese bekannte Heizmethode verbessert somit nur die Beheizung von einer oder jeder einzelnen Kochplatte. Sie ist zur Beheizung einer dicken metallischen Grillplatte, wie sie für einen optimalen Grillprozess unerlässlich ist, weder vorgesehen noch geeignet.

Schließlich ist aus dem Dokument DE 299 23 905 U1 eine Vorrichtung zum Beheizen von Heizplatten bekannt, bei der stabartige Strahlungsheizkörper in Bohrungen angeordnet sind, die über die gesamte Länge einer Heizplatte verlaufen. Die Heizplatte kann aus Metall, Quarzglas oder Keramik bestehen. Die Strahlungsheizkörper sind zwar unterschiedlich mit Heizenergie ansteuerbar, um eine individuelle Verteilung der Heizwärme in der Heizplatte zu ermöglichen, diese bekannte Art der Beheizung ist jedoch für eine Grillplatte, bei der die Temperatur steuerbar sein soll, ungeeignet. Mit der bekannten Heizmethode lässt sich nämlich die Temperatur nur in schmalen Streifen beeinflussen, die sich über die gesamte Länge der Heizplatte erstrecken, was für eine Grillplatte völlig unpassend wäre, da selten sich in Längsstreifen auf der Grillplatte erstreckendes Grillgut zu grillen sein dürfte. Diese bekannte Vorrichtung zum Beheizen von Heizplatten dürfte sich eher für Heizplatten eignen, wie sie in wärmetechnischen Anlagen zur Lufttrocknung eingesetzt werden, also in Durchlauföfen und Tauchbeschichtungs- oder Lackieranlagen z.B. bei der Herstellung von Pkw und Nutzfahrzeugen. Als weitere Einsatzgebiete von solchen Heizplatten wären verfahrenstechnische Wärmebehandlungsanlagen in der Chemie- und Pharmaindustrie, Aushärteöfen für Leiterplatten in der Elektroindustrie, Trockner und Aushärteöfen für Papierwerkstoffe in der Papierindustrie, Lacktrockner in Lackieranlagen der Möbelindustrie, Gemüsetrockner in der Lebensmittelindustrie und Wassertrockner in der Galvanik denkbar.

Aufgabe der Erfindung ist es, eine Grillvorrichtung der eingangs genannten Art so zu verbessern, dass sich eine metallische Grillplatte effizienter beheizen und einfacher steuern lässt.

Diese Aufgabe wird ausgehend von einer Grillvorrichtung der eingangs genannten Art erfindungsgemäß durch die im kennzeichnenden Teil des Patentanspruchs 1 angegebenen Merkmalen gelöst. Vorteilhafte Ausgestaltungen der Grillvorrichtung nach der Erfindung bilden die Gegenstände der abhängigen Ansprüche.

Da erfindungsgemäß den Regelthermostaten der ersten Temperaturfühler eine elektrische, elektronische und/oder mechanische Stellvorrichtung zugeordnet ist, mit der die Regelthermostaten gemeinsam auf eine Basisenergiezufuhr zu der Grillplatte einstellbar sind, lassen sich die Einstellmöglichkeiten der Grillplatte für den Koch auf eine Einknopfbetätigung zum Einstellen der Basisenergiezufuhr reduzieren. Bei Belastung der Grillplatte werden dann lokal festgestellte Temperaturabsenkungen durch den zugeordneten Regelthermostaten berücksichtigt, der in der betreffenden Zone die Energiezufuhr über die Basisenergiezufuhr hinaus erhöht, um die durch die Belastung bewirkte Temperaturabsenkung zu beseitigen.

Die Grillvorrichtung nach der Erfindung erlaubt im Vergleich zu dem oben diskutierten Dokument DE 34 07 965 A1 den Einsatz der üblichen runden, in Millionenstückzahlen für Ceran-Kochfelder hergestellten Strahlungsheizkörper, die anschlussfertig sind und lediglich mittels Schrauben, Spannmitteln od. dgl. an der Unterseite der Grillplatte lösbar befestigt zu werden brauchen. Solche Strahlungsheizkörper weisen jeweils wenigstens einen Heizdraht aus Widerstandsmaterial als Heizelement auf, der im Betrieb rotwarm wird und im Gegensatz zu einem Rohrheizkörper seine Wärme ohne jede Verzögerung an die Grillplatte abgibt. Der Wärmeübergang von dem Strahlungsheizkörper zu der Grillplatte erfolgt also wesentlich schneller als der Wärmeübergang von einem Rohrheizkörper auf die Grillplatte. Die Wärme lässt sich so von dem Strahlungsheizkörper wesentlich effizienter auf die Grillplatte übertragen als mit einem Rohrheizkörper. Die thermische Trägheit der Grillplatte der erfindungsgemäßen Grillvorrichtung ist somit gegenüber der der bekannten Grillvorrichtung vernachlässigbar gering. Da ein oder zwei derartige Strahlungsheizkörper wenigstens einem der ersten Temperaturfühler zugeordnet sind und deren Heizelemente jeweils Abstand von der Unterseite der Grillplatte haben, lässt sich individuell für die betreffende Zone der Grillplatte die Beheizung regeln. Da bei der Grillvorrichtung nach der Erfindung weiter die ersten Temperaturfühler jeweils zwischen den Heizelementen der Strahlungsheizkörper und der Grillfläche angeordnet sind, ist ihr Abstand von den Heizelementen der Strahlungsheizkörper so groß, so dass die ersten Temperaturfühler hauptsächlich die Temperatur der Grillfläche erfassen werden. Daher lässt sich eine Temperaturabsenkung an der Grillfläche, zum Beispiel durch Auflegen von Grillgut, durch den betreffenden ersten Temperaturfühler unmittelbar erfassen. Das ermöglicht, die Temperatur der Grillfläche lokal zu regeln, was in dem gewählten Beispiel heißt, die Temperatur der Grillfläche in der dem (den) betreffenden Strahlungsheizkörper(n) zugeordneten Zone belastungsabhängig zu erhöhen.

Wenn in einer Ausgestaltung der Grillvorrichtung nach der Erfindung die Strahlungsheizkörper runde, ovale oder polygonale Heizkörper sind, deren Heizelement jeweils wenigstens einen um ein Zentrum verlegten Heizleiter aufweist, lassen sich bei der Grillvorrichtung nach der Erfindung handelsübliche Strahlungsheizkörper, wie sie für den Einsatz bei Ceran-Kochfeldern bekannt sind, zweckmäßig einsetzen, wobei sich trotzdem eng aneinanderliegende und individuell steuerbare Heizzonen der Grillplatte ergeben.

Wenn in einer weiteren Ausgestaltung der Grillvorrichtung nach der Erfindung die ersten Temperaturfühler überwiegend jeweils einer Zone mit zwei Strahlungsheizkörpern zugeordnet sind, lässt sich die Zahl der den Temperaturfühlern zugeordneten Regelthermostaten begrenzen, was im Hinblick auf den für die Montage der Regelthermostaten üblicherweise verfügbaren Raum von Vorteil ist.

Wenn in einer weiteren Ausgestaltung der Grillvorrichtung nach der Erfindung jedem Strahlungsheizkörper wenigstens ein zweiter Temperaturfühler mit einem angeschlossenen Thermostat als Temperaturgrenzwächter zugeordnet ist, lassen sich wiederum bei der Grillvorrichtung nach der Erfindung handelsübliche Strahlungsheizkörper einsetzen, die üblicherweise bereits mit einem zweiten Temperaturfühler mit einem angeschlossenen Thermostat als Temperaturgrenzwächter geliefert werden. Mit einem solchen Thermostat wird werksseitig die Maximaltemperatur des Strahlungsheizkörpers festgelegt, deren Überschreitung der Thermostat dann verhindert.

Wenn in einer weiteren Ausgestaltung der Grillvorrichtung nach der Erfindung die ersten Temperaturfühler stabartig ausgebildet sind und sich jeweils auf einem Teil ihrer Länge über dem Heizelement eines zugeordneten Strahlungsheizkörpers erstrecken, lässt sich auf einfache Weise sicherstellen, dass jeder erste Temperaturfühler hauptsächlich die Temperatur der Grillfläche misst, der Messwert also möglichst wenig direkt durch den zugeordneten Strahlungsheizkörper beeinflusst wird.

Wenn in einer weiteren Ausgestaltung der Grillvorrichtung nach der Erfindung die ersten Temperaturfühler an der Unterseite der Grillplatte angebracht sind, wird jeder Temperaturfühler im Wesentlichen die Temperatur der Grillfläche messen.

Wenn in einer weiteren Ausgestaltung der Grillvorrichtung nach der Erfindung die ersten Temperaturfühler in der Grillplatte angebracht sind, ist sichergestellt, dass jeder erste Temperaturfühler tatsächlich hauptsächlich die Temperatur der Grillfläche misst, im Wesentlichen unbeeinflusst von der Wärmeabstrahlung des zugeordneten Strahlungsheizkörpers.

Wenn in einer weiteren Ausgestaltung der Grillvorrichtung nach der Erfindung die Strahlungsheizkörper auf der Unterseite der Grillplatte verschiebbar sind, kann ein Teil der Unterseite der Grillplatte, zum Beispiel ein Drittel, von Strahlungsheizkörpern freigehalten werden. Der übrige Teil wird eng mit Strahlungsheizkörpern bestückt. Wenn später feststeht, wie groß bei einem bestimmten Kunden der zu beheizende Teil der Grillfläche ist, können die Strahlungsheizkörper entsprechend an der Unterseite verteilt werden. Wenn zum Beispiel die Grillplatte in ihrer ganzen Größe zu beheizen ist, können die installierten Strahlungsheizkörper an der Unterseite der Grillplatte so verschoben werden, dass ihnen auf der gesamten Unterseite der Grillplatte Heizzonen von im wesentlichen gleicher Größe zugeordnet sind. Sollte hingegen eine geringere Heizleistung ausreichend sein, können die Strahlungsheizkörper in einen Teilbereich der Grillplatte verschoben werden, in welchem sie einander enger benachbart sind. Es lässt sich so zum Beispiel pro Grillplatte die halbe Heizleistung installieren, indem nur die halbe Anzahl von Strahlungsheizkörpern installiert wird. Wenn tatsächlich nur die halbe Grillfläche benötigt wird, werden alle Heizkörper in einer Hälfte der Unterseite der Grillplatte zusammen geschoben. Wird hingegen die volle Grillfläche benötigt, werden die Heizkörper so auf der Unterseite verteilt, dass sie jeweils eine Zone gleicher Heizleistung beheizen. Diese Methode erlaubt ein schnelleres Aufheizen der Grillplatte, weil eine kleinere Fläche zu erhitzen ist, und spart beträchtlich Strom, wenn nicht die volle Heizleistung installiert zu werden braucht. Zweckmäßig wird bei dieser Ausgestaltung der Erfindung die Anordnung der ersten Temperaturfühler so getroffen, dass diese jeweils zusammen mit den Strahlungsheizkörpern verschoben und an der Unterseite der Grillplatte festgespannt oder von derselben gelöst werden.

Wenn in einer weiteren Ausgestaltung der Grillvorrichtung nach der Erfindung jeder erste Temperaturfühler in eine von der Unterseite der Grillplatte aus in die Grillplatte eingearbeitete Nut eingesetzt ist, lässt sich durch die Wahl der Tiefe der Nut der Abstand zwischen Strahlungsheizkörper und erstem Temperaturfühler optimieren.

Wenn in einer weiteren Ausgestaltung der Grillvorrichtung nach der Erfindung jeder erste Temperaturfühler in eine von einer Schmalseite der Grillplatte aus in die Grillplatte eingearbeitete Bohrung eingesetzt ist, lässt sich das Einarbeiten einer Nut in die Unterseite der Grillplatte vermeiden, was fertigungstechnische und messtechnische Vorteile mit sich bringen kann.

Wenn in einer weiteren Ausgestaltung der Grillvorrichtung nach der Erfindung die mechanische Stellvorrichtung ein an Einstellspindeln der Regelthermostaten angeschlossenes Räder-, Riemen-, Ketten- oder Zahnstangengetriebe umfasst, lassen sich durch Einknopfbetätigung alle Regelthermostaten auf einfache mechanische Weise gemeinsam einstellen.

Wenn in einer weiteren Ausgestaltung der Grillvorrichtung nach der Erfindung jeder Regelthermostat so ausgebildet ist, dass er bei einer durch seinen angeschlossenen ersten Temperaturfühler erfassten Temperaturabsenkung in der diesem zugeordneten Zone aufgrund von Belastung dieser Zone die Energiezufuhr nur zu dieser Zone über die Basisenergiezufuhr hinaus belastungsabhängig erhöht, wird die für den Grillprozess erforderliche Wärmeenergie effizient genutzt, denn es wird nur in derjenigen Zone nachgeheizt, in der es die Belastung der Grillplatte durch zusätzliches aufgelegtes Grillgut erfordert.

Wenn in einer weiteren Ausgestaltung der Grillvorrichtung nach der Erfindung die Grillplatte aus Mehrschichtmaterial besteht, zweckmäßig zum Beispiel aus einer dicken Schicht Aluminium zwischen einer oberen Deckschicht und einer unteren Deckschicht jeweils aus rostfreiem Stahl, hat die Grillplatte selbst eine optimale Wärmespeicherkapazität und ist trotzdem effizient steuerbar. Außerdem ist sie etwa um die Hälfte leichter als eine herkömmliche Grillplatte aus Stahl.

Wenn in einer weiteren Ausgestaltung der Grillvorrichtung nach der Erfindung die Strahlungsheizkörper runde Strahlungsheizkörper sind, deren Heizelement jeweils ein als Spirale verlegter, wendelförmiger Heizdraht ist, können übliche Strahlungsheizkörper wie bei Ceran-Kochfeldern eingesetzt werden. Vorsorglich können diese so modifiziert werden, dass bei einem Bruch des Heizdrahtes der Heizdraht seine Lage mit Sicherheit beibehält, die Grillplatte bei Beschädigung des Heizdrahtes also nicht durch Kontakt mit dem schadhaften Heizdraht an Spannung gelegt wird. Vorteilhafterweise lässt sich eine metallische Grillplatte aber ohnehin erden, so dass die Sicherheit auch im Schadensfalle gewährleistet ist.

Ausführungsbeispiele der Erfindung werden im Folgenden unter Bezugnahme auf die Zeichnungen näher beschrieben. Es zeigt
- Fig. 1: ein erstes Ausführungsbeispiel einer Grillvorrichtung nach der Erfindung in Draufsicht,
- Fig. 2: die Grillvorrichtung nach Fig. 1 in einer Längsschnittansicht,
- Fig. 3: die Grillvorrichtung nach Fig. 1 in einer Querschnittansicht,
- Fig. 4: die Grillvorrichtung in der Darstellung nach Fig. 3 mit einer Stellvorrich- tung, die statt eines Rädergetriebes ein Zahnstangengetriebe aufweist,
- Fig. 5: ein zweites Ausführungsbeispiel der Grillvorrichtung nach der Erfindung mit verschiebbaren Strahlungsheizkörpern, die in Fig. 5a gleichmäßig die Grillfläche beheizen und in Fig. 5b auf einer Seite zusammen ge- schoben sind und im Wesentlichen nur zwei Drittel der Grillfläche be- heizen,
- Fig. 6: eine Querschnittansicht der Grillvorrichtung nach Fig. 5,
- Fig. 7: ein Ausführungsbeispiel eines der Strahlungsheizkörper der Grillvorrich- tung nach der Erfindung, und zwar in Fig. 7a in Draufsicht, in Fig. 7b in einer Teilquerschnittansicht und in Fig. 7c in einer Teilseitenansicht, und
- Fig. 8: in einer Teilschnittansicht einen labyrinthartigen Luftauslass der Grill- vorrichtung nach der Erfindung.

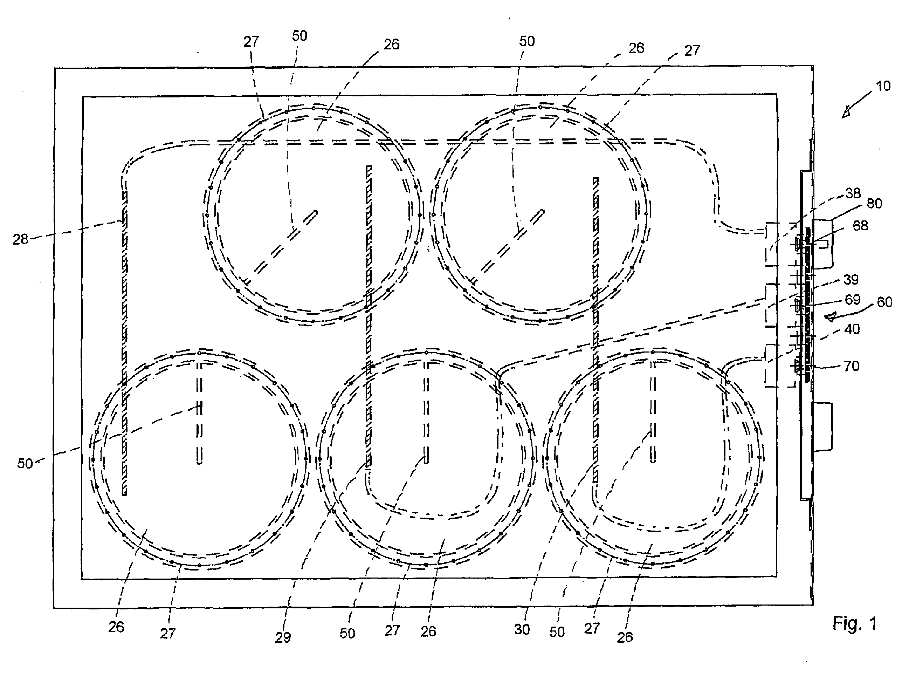

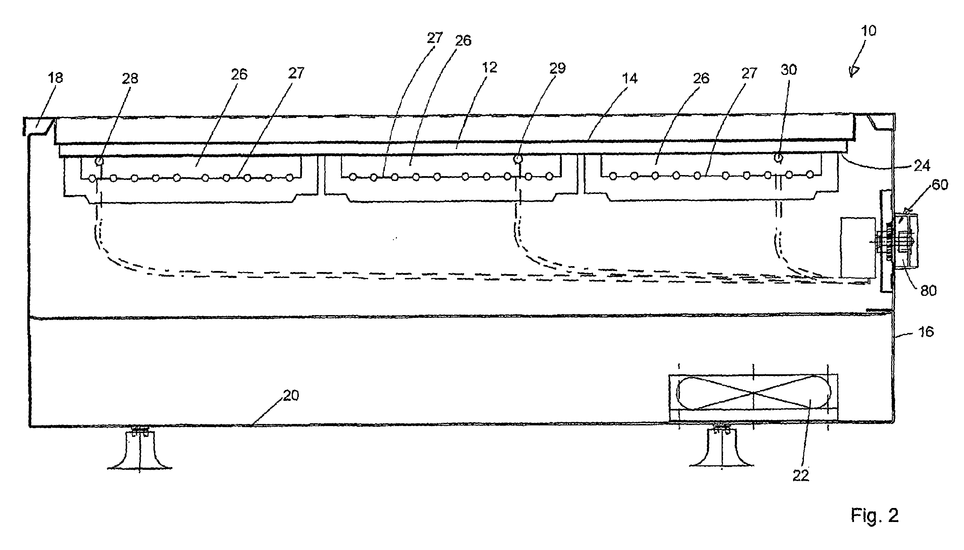

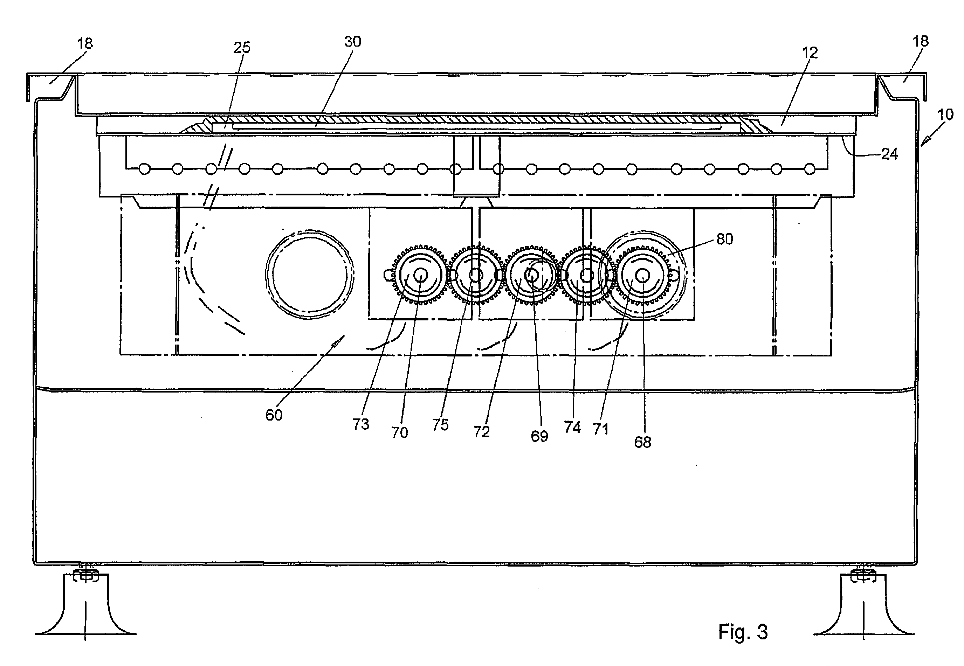

In den Fig. 1 bis 3 ist ein erstes Ausführungsbeispiel einer Grillvorrichtung nach der Erfindung dargestellt und insgesamt mit 10 bezeichnet. In Fig. 1 ist die Grillvorrichtung 10 in Draufsicht, in Fig. 2 in einer Längsschnittansicht und in Fig. 3 in einer Querschnittansicht gezeigt. Auf diese Figuren wird im Folgenden Bezug genommen.

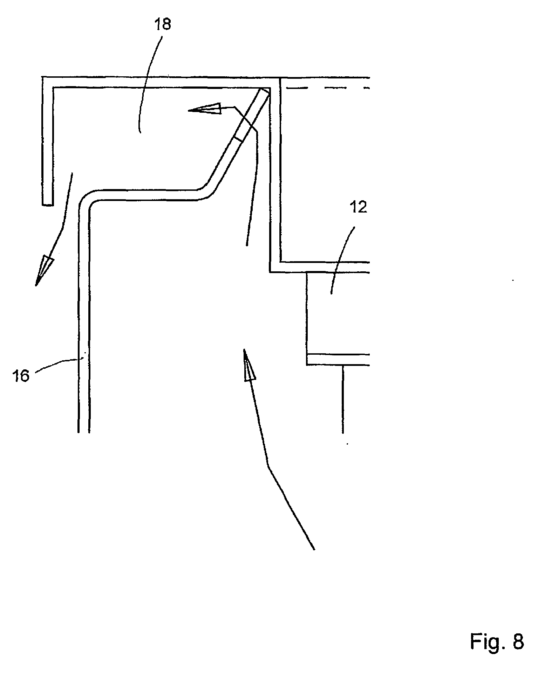

Die Grillvorrichtung 10 hat eine metallische Grillplatte 12, deren obere Fläche eine Grillfläche 14 ist. Die Grillplatte 12 ist auf ein Gehäuse 16 aufgesetzt. Die Bedien- oder Vorderseite des Gehäuses 16 befindet sich in der Darstellung in Fig. 2 rechts. Auf den beiden Längsseiten und auf der zu der Bedienseite entgegengesetzten Rückseite des Gehäuses 16 ist zwischen der Grillplatte 12 und dem Gehäuse 16 ein labyrinthartiger Luftauslass 18 angeordnet, der als vergrößerte Einzelheit in Fig. 8 gezeigt ist. Ein auf einem Boden 20 des Gehäuses 16 angebrachtes Gebläse 22 fördert Luft in das Innere des Gehäuses 16, die über den Luftauslass 18 wieder nach außen abgegeben wird.

Die Grillplatte 12 besteht aus Mehrschichtmaterial, bei dem es sich in dem hier beschriebenen Ausführungsbeispiel um ein Mehrschichtmaterial aus einer dicken Schicht Aluminium zwischen einer oberen Deckschicht und einer unteren Deckschicht jeweils aus rostfreiem Stahl handelt. Statt aus Mehrschichtmaterial könnte die Grillplatte 12 auch aus technischer Keramik bestehen. Eine geeignete, insbesondere gut wärmeleitende graue Keramik wird von der Firma Rauschert, D-96332 Pressig hergestellt.

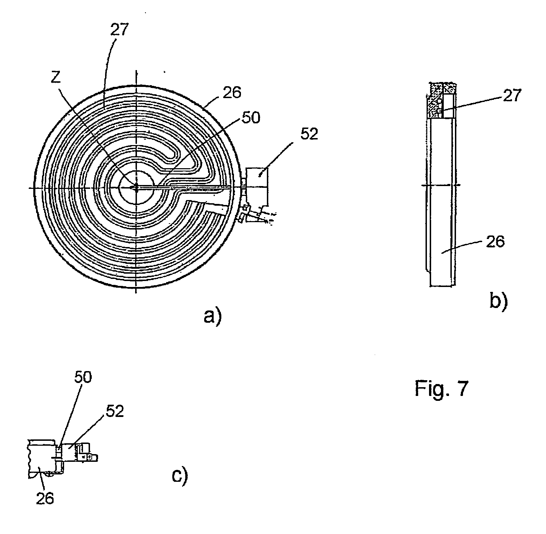

Die Grillplatte 12 trägt an ihrer zu der Grillfläche 14 entgegengesetzten Unterseite 24 mehrere einzelne Strahlungsheizkörper 26, die gegenseitig benachbart an der Unterseite 24 lösbar befestigt sind, zum Beispiel mittels Schrauben (nicht dargestellt). Die gegenseitige Lage der Strahlungsheizkörper 26 unterhalb der Grillplatte 12 ist für das erste Ausführungsbeispiel in der gestrichelten Darstellung in Fig. 1 in Draufsicht gezeigt. Diese Darstellung zeigt, ebenfalls gestrichelt, drei stabartige erste Temperaturfühler 28, 29, 30, die zur Regelung der Temperaturbegrenzung der Grillplatte 12 jeweils an einen zugeordneten Regelthermostaten 38, 39 bzw. 40 angeschlossen sind. Der Begriff "stabartig" soll gebogen oder gerade umfassen. Die elektrischen Verbindungen, durch die die Strahlungsheizkörper 26 über die Regelthermostate 38, 39, 40 mit dem Netz verbunden sind, sind der Übersichtlichkeit halber in den Figuren nicht dargestellt worden, weil sie für das Verständnis der Erfindung nicht erforderlich sind. Die Strahlungsheizkörper 26 sind runde Strahlungsheizkörper, deren Heizelement 27 jeweils ein als Spirale verlegter wendelförmiger Heizdraht ist. Ein Ausführungsbeispiel eines solchen Strahlungsheizkörpers 26 der Grillvorrichtung 10 ist in Fig. 7 gezeigt, und zwar in Fig. 7a in Draufsicht, in Fig. 7b in einer Teilquerschnittansicht und in Fig. 7c in einer Teilseitenansicht. Auf Fig. 7 wird weiter unten noch näher eingegangen. Statt eines wendelförmigen Heizdrahtes könnte in den Strahlungsheizkörpern auch ein Heizleiter aus plissiertem Bandmaterial verwendet werden, das schneller zum Glühen kommt als ein wendelförmiger Heizdraht.

Aus der Darstellung in Fig. 1 ist zu erkennen, dass der erste Temperaturfühler 28 einem der fünf dargestellten Strahlungsheizkörper 26 zugeordnet ist, und dass die ersten Temperaturfühler 29 und 30 jeweils zwei Strahlungsheizkörpern 26 zugeordnet sind. Die ersten Temperaturfühler 28, 29, 30 sind jeweils zwischen den Heizelementen 27 der Strahlungsheizkörper 26 und der Grillfläche 14 angeordnet. Die Anordnung kann dabei so getroffen sein, wie dargestellt, dass die ersten Temperaturfühler 28, 29, 30 an der Unterseite 24 der Grillplatte 12 lösbar befestigt sind, zum Beispiel mit Spannmitteln federnd an die Unterseite 24 angedrückt sind, oder so, dass die ersten Temperaturfühler 28, 29, 30 in der Grillplatte 12 angebracht sind. Auf die letztgenannte Möglichkeit wird weiter unten noch näher eingegangen. Die Realisierung der erstgenannten Möglichkeit bei dem hier beschriebenen Ausführungsbeispiel ist aus der Darstellung in den Fig. 1 und 2 ersichtlich.

Zur zonal regelbaren Beheizung der Grillplatte 12 sind die Strahlungsheizkörper 26 der Grillplatte einzeln oder paarweise und wenigstens einem der ersten Temperaturfühler 28, 29, 30 zugeordnet. in der Darstellung in Fig. 1 ist der linke Strahlungsheizkörper 26 einer Zone der Grillplatte 12 zugeordnet. Dieser Zone ist auch der erste Temperaturfühler 28 zugeordnet. Die beiden übereinander angeordneten mittleren Strahlungsheizkörper 26 sind einer zweiten Zone zugeordnet, welcher auch der erste Temperaturfühler 29 zugeordnet ist. Die beiden übereinander angeordneten rechten Strahlungsheizkörper 26 sind einer dritten Zone zugeordnet, welcher auch der erste Temperaturfühler 30 zugeordnet ist. Aufgrund dieser Anordnung ist die Beheizung der Grillplatte 12 zonal regelbar, was weiter unten näher beschrieben ist.

Jedem Strahlungsheizkörper 26 ist ein zweiter Temperaturfühler 50 zugeordnet. In Fig. 7, auf die nun Bezug genommen wird, ist ein Strahlungsheizkörper 26 in Draufsicht gezeigt. Bei den hier beschriebenen Ausführungsbeispielen sind die Strahlungsheizkörper 26 jeweils runde Strahlungsheizkörper, wie es in Fig. 7a zu erkennen ist. Es könnten stattdessen auch ovale oder polygonale Strahlungsheizkörper sein. Das Heizelement 27 der Strahlungsheizkörper 26 weist jeweils wenigstens einen um ein Zentrum Z verlegten Heizleiter auf. An jeden der zweiten Temperaturfühler 50 ist ein Thermostat 52 als Temperaturgrenzwächter angeschlossen. Der Thermostat 52 ist in Fig. 7a in Draufsicht und in Fig. 7c in einer Teilseitenansicht des Strahlungsheizkörpers 26 zu erkennen. An dem Thermostat 52 lässt sich beispielsweise eine maximal zulässige Temperatur von 250 °C am Gehäuse des Strahlungsheizkörpers 26 einstellen. Im Betrieb sorgt dann der Thermostat 52 als Temperaturgrenzwächter dafür, dass diese eingestellte Maximaltemperatur nicht überschritten wird. Der in Fig. 7 dargestellte Strahlungsheizkörper ist ein handelsübliches Produkt der Firma E.G.O. Elektro-Gerätebau GmbH, D-75038 Oberderdingen. Dieser kann, wie eingangs erwähnt, aber so modifiziert sein, dass bei einem Bruch des Heizdrahtes dieser seine Lage beibehält, also nicht mit der metallischen Grillplatte 12 in Kontakt kommt. In Fig. 1 sind nur die zweiten Temperaturfühler 50 gezeigt, nicht aber deren Thermostate 52 und deren Verbindungen mit den zweiten Temperaturfühlern 50, die der Übersichtlichkeit halber weggelassen worden sind.

Die zweiten Temperaturfühler 50 sind ebenso wie die ersten Temperaturfühler 28, 29, 30 jeweils stabartig gerade ausgebildet. Jeder erste Temperaturfühler 28, 29, 30 erstreckt sich auf einem Teil seiner Länge über dem Heizelement 27 eines zugeordneten Strahlungsheizkörpers 26, wie es in der Darstellung in Fig. 1 ebenfalls zu erkennen ist. Jeder der zweiten Temperaturfühler 50 ist an einem der Strahlungsheizkörper 26 befestigt (Fig. 7).

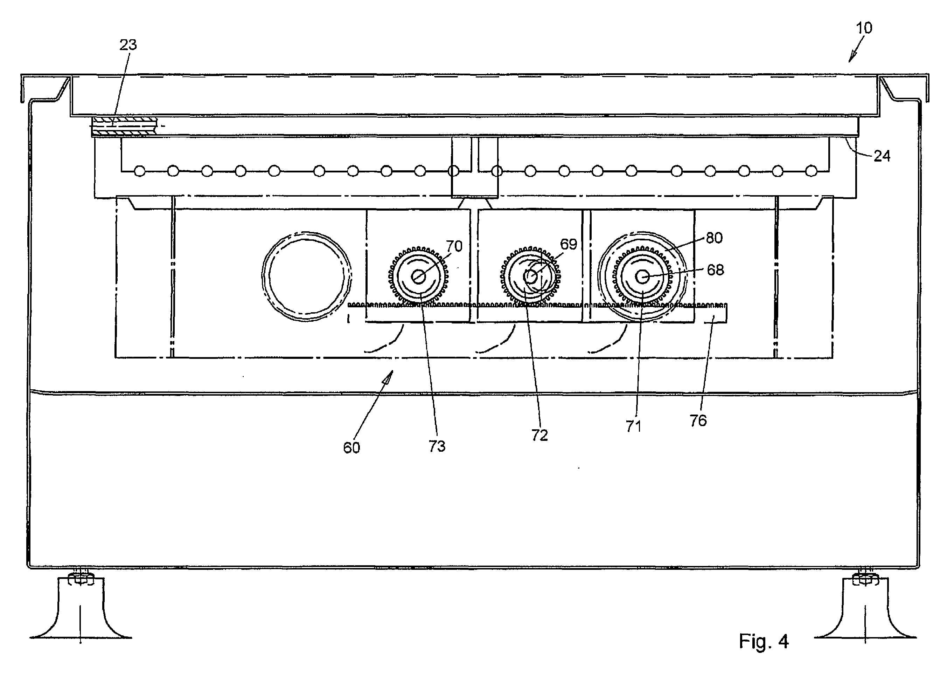

In Fig. 3, die die Grillvorrichtung nach Fig. 1 in einer Querschnittansicht zeigt, ist zusätzlich die Grillplatte 12 aufgebrochen dargestellt, um eine in die Unterseite 24 der Grillplatte 12 eingearbeitete Nut 25 sichtbar zu machen, in die der erste Temperaturfühler 30 eingesetzt ist. Der erste Temperaturfühler 30 befindet sich so in noch engerer Nähe zu der Grillfläche 14 der Grillplatte 12. Die übrigen beiden ersten Temperaturfühler 28 und 29 sind in entsprechende Nuten (nicht dargestellt) eingesetzt, die ebenfalls von der Unterseite 24 der Grillplatte 12 aus in die Grillplatte eingearbeitet sind. Im Gegensatz dazu sind in der Darstellung in Fig. 2 die ersten Temperaturfühler 28, 29, 30 jeweils auf der Unterseite 24 der Grillplatte 12 befestigt. Die in Fig. 3 gezeigte Anordnung könnte statt dessen so getroffen sein, dass jeder erste Temperaturfühler 28, 29, 30 in eine von einer Längsseite der Grillplatte 12 aus in die Grillplatte eingearbeitete Bohrung 23 (in Fig. 4 links angedeutet) eingesetzt ist. In diesem Fall sind statt der drei Nuten 25 dann drei Bohrungen 23 vorhanden, in die jeweils einer der ersten Temperaturfühler 28, 29 bzw. 30 (in Fig. 4 nicht dargestellt) eingesetzt ist.

Den Regelthermostaten 38, 39, 40 der ersten Temperaturfühler 28, 29, 30 ist bei dem hier beschriebenen Ausführungsbeispiel der Grillvorrichtung 10 eine insgesamt mit 60 bezeichnete mechanische Stellvorrichtung zugeordnet, mit der die Regelthermostaten 38, 39, 40 gemeinsam auf eine Basisenergiezufuhr zu der Grillplatte 12 einstellbar sind. Statt der mechanischen Stellvorrichtung 60 könnte auch eine elektrische oder elektronische Stellvorrichtung (nicht dargestellt) eingesetzt werden. Die Stellvorrichtung 60 umfasst in dem hier dargestellten Ausführungsbeispiel ein an Einstellspindeln 68, 69, 70 der Regelthermostaten 38, 39 bzw. 40 angeschlossenes Rädergetriebe. Statt des Rädergetriebes könnte die mechanische Stellvorrichtung 60 auch ein Riemen-, Ketten- oder Zahnstangengetriebe aufweisen. Ein solches Zahnstangengetriebe wird weiter unten mit Bezug auf Fig. 4 beschrieben. Auf jeder Einstellspindel 68, 69, 70 ist ein Zahnrad 71, 72 bzw. 73 befestigt. Damit die Einstellspindeln 68, 69, 70 durch Drehung der Spindel 68 mit einem Einstellknopf 80 in gleicher Richtung gedreht werden können, ist zwischen den Zahnrädern 71 und 69 und zwischen den Zahnrädern 72 und 73 ein Zwischenrad 74 bzw. 75 angeordnet, wie es in Fig. 3 dargestellt ist.

In dem Ausführungsbeispiel nach Fig. 4 sind die Zahnräder 71, 72 und 73 statt mit den Zwischenrädern 74, 75 mit einer gemeinsamen Zahnstange 76 in Eingriff, die an der Vorderseite des Gehäuses 16 verschiebbar gelagert ist.

Durch Drehen des Einstellknopfes 80 kann eine Bedienungsperson die Regelthermostaten 38, 39, 40 gemeinsam auf die Basisenergiezufuhr zu der Grillplatte 12 einstellen. Die Netzverbindungen der Regelthermostaten 38, 39, 40 sind der Übersichtlichkeit halber nicht dargestellt worden. Für den Fall, dass einer der ersten Temperaturfühler 28, 29, 30 eine Temperaturabsenkung in der ihm zugeordneten Zone der Grillplatte 12 aufgrund von Belastung dieser Zone erfasst, ist jeder Regelthermostat 38, 39, 40 so ausgebildet, dass er die Energiezufuhr nur zu dieser Zone über die Basisenergiezufuhr hinaus belastungsabhängig erhöht.

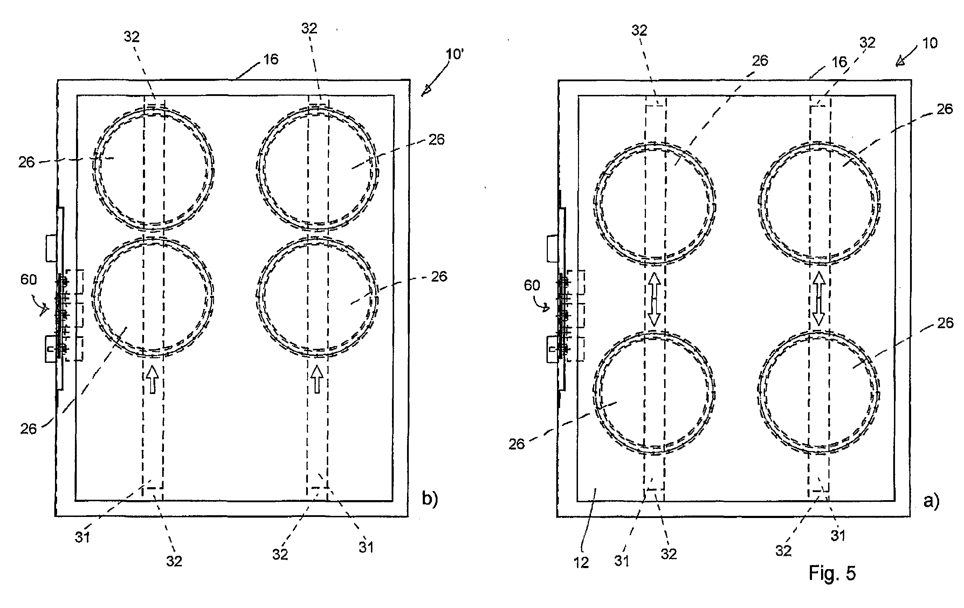

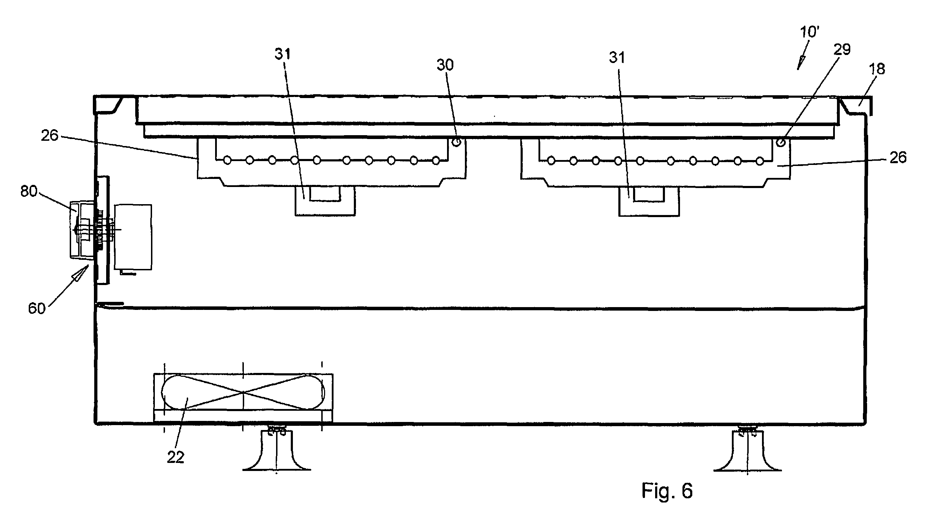

Eine zusätzliche oder alternative Möglichkeit der Steuerung der Energiezufuhr ergibt sich dadurch, dass die Strahlungsheizkörper 26 auf der Unterseite 24 der Grillplatte 12 verschiebbar sind. Ein entsprechendes zweites Ausführungsbeispiel der Grillvorrichtung 10' nach der Erfindung ist in den Fig. 5 und 6 gezeigt. Gemäß der Darstellung in Fig. 5a sind vier Strahlungsheizkörper 26 der Grillplatte 12 so zugeordnet, dass jedem Strahlungsheizkörper 26 eine etwa gleichgroße zu beheizende Zone zugeordnet ist. Die Strahlungsheizkörper 26 sind an der Grillplatte 12 verschiebbar angebracht. Ein Beispiel für die verschiebbare Anbringung ist in Fig. 6 gezeigt, die eine Querschnittansicht der Grillvorrichtung 10' nach Fig. 5 ist. In Fig. 5 sind die ersten und die zweiten Temperaturfühler jeweils nicht dargestellt. Zweckmäßig wird die Anordnung der Temperaturfühler so getroffen, dass diese mit ihrem zugeordneten Strahlungsheizkörper mit verschoben werden, wenn dieser verschoben wird. Wenn die Grillplatte 12 nur zur Hälfte oder zu zwei Drittel benötigt wird, werden die in Fig. 5 unteren beiden Strahlungsheizkörper 26 zu den anderen beiden Strahlungsheizkörpern 26 hin so verschoben, wie es in Fig. 5b gezeigt ist. Mit weniger installierter Heizleistung lässt sich so die ganze Grillplatte 12 beheizen, wenn die Strahlungsheizkörper 26 so wie in Fig. 5a angeordnet sind, oder nur zu zwei Dritteln, wenn die Strahlungsheizkörper 26 so wie in Fig. 5b angeordnet sind. Zusätzlich oder alternativ zu der Stromersparnis aufgrund der durch die Regelthermostaten 38, 39, 40 gesteuerten zonalen Beheizung der Grillplatte 12 ergibt sich so eine entsprechende oder zusätzliche Stromersparnis. Außerdem ist es möglich, mit Strahlungsheizkörpern eines Typs die Gestaltungsmöglichkeiten der Beheizung wesentlich zu erweitern.

In der Querschnittansicht nach Fig. 6 ist zu erkennen, dass sich unter jeweils zwei Strahlungsheizkörpern 26 jeweils ein Träger 31 erstreckt. Die Träger 31 sind an den Enden über jeweils vertikale Verbindungsglieder 32 mit der Unterseite der Grillplatte 12 verbunden. Die Anordnung ist dabei so getroffen, dass die Träger 31 die Strahlungsheizkörper 26 mit deren zugeordneten Temperaturfühlern 29 und 30 elastisch an die Unterseite der Grillplatte 12 andrücken. Das Andrücken geschieht dabei so, dass die Strahlungsheizkörper 26 trotzdem bei Bedarf von Hand in Längsrichtung der Träger 31 verschiebbar sind. Zweckmäßig wird für jeden der in Längsrichtung der Träger 31 hintereinander angeordneten beiden Strahlungsheizkörper 26 jeweils ein gesonderter erster Temperaturfühler 29 bzw. 30 vorgesehen. Die Temperaturfühler 29, 30 werden durch die Strahlungsheizkörper 26 an die Unterseite der Grillplatte 12 angedrückt.

### Bezugszeichenliste

- 10: Grillvorrichtung
- 10': Grillvorrichtung
- 12: Grillplatte
- 14: Grillfläche
- 16: Gehäuse
- 18: Luftauslass
- 20: Boden
- 22: Gebläse
- 23: Bohrung
- 24: Unterseite
- 25: Nut
- 26: Strahlungsheizkörper
- 27: Heizelement
- 28: erster Temperaturfühler
- 29: erster Temperaturfühler
- 30: erster Temperaturfühler
- 31: Träger
- 32: Verbindungsglieder
- 38: Regelthermostat
- 39: Regelthermostat
- 40: Regelthermostat
- 50: zweiter Temperaturfühler
- 52: Thermostat
- 60: mechanische Stellvorrichtung
- 68: Einstellspindel
- 69: Einstellspindel
- 70: Einstellspindel
- 71: Zahnrad
- 72: Zahnrad
- 73: Zahnrad
- 74: Zwischenrad
- 75: Zwischenrad
- 76: Zahnstange
- 80: Einstellknopf
- Z: Zentrum

## Patentansprüche

1. Grillvorrichtung (10) mit einer metallischen Grillplatte (12), deren obere Fläche als Grillfläche (14) dient,
mit mehreren einzelnen Heizkörpern, die gegenseitig benachbart an der Unterseite der Grillplatte (12) angebracht sind und jeweils wenigstens ein Heizelement (27) aufweisen, und
mit ersten Temperaturfühlern (28-30), die zur Regelung der Temperaturbegrenzung jeweils an einen zugeordneten Regelthermostaten (38, 39, 40) angeschlossen sind,
wobei die Heizkörper an der Unterseite der Grillplatte lösbar befestigte Strahlungsheizkörper (26) sind, die einzeln oder paarweise einer Zone der Grillplatte (12) und wenigstens einem der ersten Temperaturfühler (28 - 30) zur zonal regelbaren Beheizung der Grillplatte (12) zugeordnet sind und deren Heizelemente (27) jeweils Abstand von der Unterseite der Grillplatte (12) haben, und
wobei die ersten Temperaturfühler (28 - 30) jeweils zwischen den Heizelementen (27) der Strahlungsheizkörper (26) und der Grillfläche (14) angeordnet sind,
**gekennzeichnet durch** eine den Regelthermostaten (38 - 40) der ersten Temperaturfühler (28 - 30) zugeordnete elektrische, elektronische und/oder mechanische Stellvorrichtung (60), mit der die Regelthermostaten (38 - 40) gemeinsam auf eine Basisenergiezufuhr zu der Grillplatte (12) einstellbar sind.

2. Grillvorrichtung nach Anspruch 1, **dadurch gekennzeichnet, dass** die Strahlungsheizkörper (26) runde, ovale oder polygonale Heizkörper sind, deren Heizelemente (27) jeweils wenigstens einen um ein Zentrum (Z) verlegten Heizleiter aufweist.

3. Grillvorrichtung nach Anspruch 1 oder 2, **dadurch gekennzeichnet, dass** die ersten Temperaturfühler (28 - 30) überwiegend jeweils einer Zone mit zwei Strahlungsheizkörpern (26) zugeordnet sind.

4. Grillvorrichtung nach einem der vorhergehenden Ansprüche, **dadurch gekennzeichnet, dass** jedem Strahlungsheizkörper (26) wenigstens ein zweiter Temperaturfühler (50) mit einem angeschlossenen Thermostat (52) als Temperaturgrenzwächter zugeordnet ist.

5. Grillvorrichtung nach einem der vorhergehenden Ansprüche, **dadurch gekennzeichnet**, die ersten Temperaturfühler (28 - 30) stabartig ausgebildet sind und sich jeweils auf einem Teil ihrer Länge über dem Heizelement (27) eines zugeordneten Strahlungsheizkörpers (26) erstrecken.

6. Grillvorrichtung nach einem der vorhergehenden Ansprüche, **dadurch gekennzeichnet, dass** die ersten Temperaturfühler (28 - 30) an der Grillplatte (12) angebracht sind.

7. Grillvorrichtung nach einem der Ansprüche 1 bis 5, **dadurch gekennzeichnet, dass** die ersten Temperaturfühler (28 - 30) in der Grillplatte (12) angebracht sind.

8. Grillvorrichtung nach einem der Ansprüche 1 bis 6, **dadurch gekennzeichnet, dass** die Strahlungsheizkörper (26) auf der Unterseite (24) der Grillplatte (12) verschiebbar sind.

9. Grillvorrichtung nach Anspruch 7, **dadurch gekennzeichnet, dass** jeder erste Temperaturfühler (28 - 30) in eine von der Unterseite (24) der Grillplatte (12) aus in die Grillplatte (12) eingearbeitete Nut (25) eingesetzt ist.

10. Grillvorrichtung nach Anspruch 7, **dadurch gekennzeichnet, dass** jeder erste Temperaturfühler (28 - 30) in eine von einer Längsseite der Grillplatte (12) aus in die Grillplatte (12) eingearbeitete Bohrung (23) eingesetzt ist.

11. Grillvorrichtung nach einem der vorhergehenden Ansprüche , **dadurch gekennzeichnet, dass** die mechanische Stellvorrichtung (60) ein an Einstellspindeln (68, 69, 70) der Regelthermostaten (38 - 40) angeschlossenes Räder-, Riemen-, Ketten- oder Zahnstangengetriebe umfasst.

12. Grillvorrichtung nach einem der vorhergehenden Ansprüche, **dadurch gekennzeichnet, dass** jeder Regelthermostat (38 - 40) so ausgebildet ist, dass er bei einer durch seinen angeschlossenen ersten Temperaturfühler (28 - 30) erfassten Temperaturabsenkung in der diesem zugeordneten Zone aufgrund von Belastung dieser Zone die Energiezufuhr nur zu dieser Zone über die Basisenergiezufuhr hinaus belastungsabhängig erhöht.

13. Grillvorrichtung nach einem der vorhergehenden Ansprüche, **dadurch gekennzeichnet, dass** die Grillplatte (12) aus Mehrschichtmaterial besteht.

14. Grillvorrichtung nach Anspruch 13, **dadurch gekennzeichnet, dass** das Mehrschichtmaterial aus einer dicken Schicht Aluminium zwischen einer oberen Deckschicht und einer unteren Deckschicht jeweils aus rostfreiem Stahl besteht.

## Claims

1. Grill device (10) having a metal grill plate (12), the upper surface thereof serving as a grill surface (14),
comprising a plurality of individual heating bodies, which are attached adjacent to one another on the underside of the grill plate (12), each heating body comprising at least one heating element (27), and
comprising first temperature sensors (28-30) which are each connected to an associated regulating thermostat (38, 39, 40) for regulating the temperature limit,
the heating bodies being radiant heating bodies (26) releasably fastened to the underside of the grill plate, said heating bodies being assigned individually or in pairs to a zone of the grill plate (12) and at least one of the first temperature sensors (28-30) for the heating of the grill plate (12) which may be regulated in zones, and each of the heating elements (27) thereof being spaced apart from the underside of the grill plate (12), and
each first temperature sensor (28-30) being arranged between the heating elements (27) of the radiant heating bodies (26) and the grill surface (14),
**characterised by** an electrical, electronic and/or mechanical adjusting device (60) assigned to the regulating thermostats (38-40) of the first temperature sensors (28-30), by which the regulating thermostats (38-40) may be collectively adjusted to a basic energy supply for the grill plate (12).

2. Grill device according to Claim 1, **characterised in that** the radiant heating bodies (26) are round, oval or polygonal heating bodies, each of the heating elements (27) thereof comprising at least one heat conductor arranged around a centre (Z).

3. Grill device according to Claim 1 or 2, **characterised in that** the first temperature sensors (28-30) are each primarily assigned to a zone with two radiant heating bodies (26).

4. Grill device according to any one of the preceding claims, **characterised in that** at least one second temperature sensor (50) with an associated thermostat (52) as a temperature limit monitoring device is assigned to each radiant heating body (26).

5. Grill device according to any one of the preceding claims, **characterised in that** the first temperature sensors (28-30) are of rod-like configuration and extend each on part of their length over the heating element (27) of an assigned radiant heating body (26).

6. Grill device according to any one of the preceding claims, **characterised in that** the first temperature sensors (28-30) are installed on the grill plate (12).

7. Grill device according to any one of Claims 1 to 5, **characterised in that** the first temperature sensors (28-30) are installed in the grill plate (12).

8. Grill device according to one of Claims 1 to 6, **characterised in that** the radiant heating bodies (26) on the underside (24) of the grill plate (12) are displaceable.

9. Grill device according to Claim 7, **characterised in that** each first temperature sensor (28-30) is inserted into a groove (25) incorporated in the grill plate (12) from the underside (24) of the grill plate (12).

10. Grill device according to Claim 7, **characterised in that** each first temperature sensor (28-30) is inserted into a bore (23) incorporated in the grill plate (12) from a longitudinal side of the grill plate (12).

11. Grill device according to any one of the preceding claims, **characterised in that** the mechanical adjusting device (60) comprises a gear set, belt drive, chain drive or rack and pinion gear connected to adjusting spindles (68, 69, 70) of the regulating thermostats (38-40).

12. Grill device according to any one of the preceding claims, **characterised in that** each regulating thermostat (38-40) is configured so that in the event of a drop in temperature detected by its associated first temperature sensor (28-30) in the zone assigned thereto, due to the loading of said zone, said regulating thermostat increases the energy supply beyond the basic energy supply only to said zone, depending on the load.

13. Grill device according to any one of the preceding claims, **characterised in that** the grill plate (12) consists of multi-layered material.

14. Grill device according to Claim 13, **characterised in that** the multi-layered material consists of a thick layer of aluminum, between an upper top layer and a lower top layer, each top layer consisting of stainless steel.

## Revendications

1. Grilloir (10) comportant une plaque à griller métallique (12) dont la surface supérieure sert de surface à griller (14), comportant plusieurs corps de chauffe individuels qui sont installés de manière adjacente sur la face inférieure de la plaque à griller (12) et présentent chacun au moins un élément de chauffe (27) et comportant des premiers détecteurs de température (28 à 30) qui, pour régler la limitation de température, sont chacun raccordés à un thermostat de réglage associé (38, 39, 40), les corps de chauffe étant des corps de chauffe à rayonnement (26), fixés de manière amovible sur la face inférieure de la plaque à griller, qui sont attribués séparément ou par paire à une zone de la plaque à griller (12) et à au moins l'un des premiers détecteurs de température (28 à 30) pour le chauffage réglable par zone de la plaque à griller (12) et dont les éléments de chauffe (27) sont chacun situés à distance de la face inférieure de la plaque à griller (12) et les premiers détecteurs de température (28 à 30) étant chacun disposés entre les éléments de chauffe (27) des corps de chauffe à rayonnement (26) et la surface à griller (14), **caractérisé par** un système de commande (60) électrique, électronique et/ou mécanique associé aux thermostats de réglage (38 à 40) des premiers détecteurs de température (28 à 30), système de commande au moyen duquel les thermostats de réglage (38 à 40) peuvent être réglés conjointement sur une amenée d'énergie de base en direction de la plaque à griller (12).

2. Grilloir selon la revendication 1, **caractérisé en ce que** les corps de chauffe à rayonnement (26) sont des corps de chauffe ronds, ovales ou polygonaux dont les éléments de chauffe (27) présentent chacun au moins un conducteur chauffant posé autour d'un centre (Z).

3. Grilloir selon la revendication 1 ou 2, **caractérisé en ce que** les premiers détecteurs de température (28 à 30) sont chacun principalement attribués à une zone comportant deux corps de chauffe à rayonnement (26).

4. Grilloir selon l'une quelconque des revendications précédentes, **caractérisé en ce qu'**on a attribué à chaque corps de chauffe à rayonnement (26) au moins un second détecteur de température (50) avec un thermostat raccordé (52) en tant que dispositif de surveillance de la limite de température.

5. Grilloir selon l'une quelconque des revendications précédentes, **caractérisé en ce que** les premiers détecteurs de température (28 à 30) sont réalisés à mode de bâtons et s'étendent chacun, avec une partie de leur longueur, sur l'élément de chauffe (27) d'un corps de chauffe à rayonnement (26) associé.

6. Grilloir selon l'une quelconque des revendications précédentes, **caractérisé en ce que** les premiers détecteurs de température (28 à 30) sont installés sur la plaque à griller (12).

7. Grilloir selon l'une quelconque des revendications 1 à 5, **caractérisé en ce que** les premiers détecteurs de température (28 à 30) sont installés dans la plaque à griller (12).

8. Grilloir selon l'une quelconque des revendications 1 à 6, **caractérisé en ce que** les corps de chauffe à rayonnement (26) sont déplaçables sur la face inférieure (24) de la plaque à griller (12).

9. Grilloir selon la revendication 7, **caractérisé en ce que** chacun des premiers détecteurs de température (28 à 30) est inséré dans une rainure (25) partant de la face inférieure (24) de la plaque à griller (12) pour rejoindre l'intérieur de la plaque à griller (12).

10. Grilloir selon la revendication 7, **caractérisé en ce que** chacun des premiers détecteurs de température (28 à 30) est inséré dans un alésage (23) partant d'un côté longitudinal de la plaque à griller (12) pour rejoindre l'intérieur de la plaque à griller (12).

11. Grilloir selon l'une quelconque des revendications précédentes, **caractérisé en ce que** le système de commande mécanique (60) comporte un train d'engrenages, un engrenage à courroie, un engrenage à chaîne ou un engrenage à crémaillère raccordé à des broches de réglage (68, 69, 70) des thermostats de réglage (38 à 40).

12. Grilloir selon l'une quelconque des revendications précédentes, **caractérisé en ce que** chaque thermostat de réglage (38 à 40) est réalisé de telle sorte qu'il augmente, en fonction de la charge, lors d'une baisse de température détectée par son premier détecteur de température raccordé (28 à 30) dans la zone qui lui est attribuée, sur la base de la charge de cette zone, l'amenée d'énergie en direction de cette zone uniquement, au-delà de l'amenée d'énergie de base.

13. Grilloir selon l'une quelconque des revendications précédentes, **caractérisé en ce que** la plaque à griller (12) est composée d'un matériau à couches multiples.

14. Grilloir selon la revendication 13, **caractérisé en ce que** le matériau à couches multiples est composé d'une épaisse couche d'aluminium placée entre une couche de couverture supérieure et une couche de couverture inférieure, chacune en acier inoxydable.
